Europäisches Patentamt

European Patent Office

Office européen des brevets

(19)

(11) Veröffentlichungsnummer: **0 063 697**
A1

# (12) EUROPÄISCHE PATENTANMELDUNG

(21) Anmeldenummer: 82102551.7

(22) Anmeldetag: 26.03.82

(51) Int. Cl.³: **B 01 D 21/06**, B 01 D 21/18

(30) Priorität: 02.04.81 DE 8109945 U
20.06.81 DE 8118058 U

(43) Veröffentlichungstag der Anmeldung: 03.11.82
Patentblatt 82/44

(84) Benannte Vertragsstaaten: AT BE CH DE FR GB IT LI LU NL SE

(71) Anmelder: **Gebr. Bellmer GmbH & Co. KG,**
**Maschinenfabrik, Hauptstrasse 37, D-7532 Niefern (DE)**

(72) Erfinder: **Kollmar, Ulrich, Auf dem Berg 17,**
**D-7530 Pforzheim-Würm (DE)**
Erfinder: **Meier, Horst, Schillingswaldweg 7,**
**D-7134 Kleinvillars (DE)**
Erfinder: **Messing, Alexander, Haidachweg 25,**
**D-7530 Pforzheim (DE)**

(74) Vertreter: **Frank, Gerhard, Dipl.-Phys. et al,**
**Patentanwälte Dr. F. Mayer & G. Frank Westliche 24,**
**D-7530 Pforzheim (DE)**

(54) Vorrichtung zum Einbau in Klärbecken.

(57) Eine Vorrichtung zum Einbau in Klärbecken besteht im wesentlichen aus einem Tragarm (11), der an einer zentral drehenden Welle befestigt ist und dessen äußeres Ende sich über eine Stützeinrichtung (13) am Beckenrand abstützt und somit einen Teil des Gewichtes des Tragarms aufnimmt. Diese Abstützung am äußeren Beckenrand ermöglicht einerseits eine gute Führung der entsprechenden Einrichtungen zur Klärgutbehandlung. Durch eine wesentliche Platzersparnis gegenüber bekannten Lösungen ist es bei Verwendung eines erfindungsgemäß gelagerten Tragarms als Rundräumer außerdem möglich, im oberen Bereich des Klärbeckens zusätzliche Einrichtungen zur Schwimmschlammentfernung vorzusehen, wobei wiederum die erfindungsgemässe Vorrichtung, der außen abgestützte Tragarm, vorteilhaft eingesetzt werden kann.

0063697

Gebr. Bellmer GmbH & Co.KG, Maschinenfabrik, 7532 Niefern
Bundesrepublik Deutschland

## Vorrichtung zum Einbau in Klärbecken

Die Erfindung betrifft eine Vorrichtung zum Einbau in Klärbecken mit einer axial im Klärbecken drehenden Welle, an der ein radial sich erstreckender Tragarm vertikal schwenkbar gehalten ist, an dem Einrichtungen zur Behandlung des Klärgutes angebracht sind.

Eine derartige Anlage ist aus der österreichischen Patentschrift 265 993 bekannt. Die dort beschriebene Anlage betrifft einen Schlammeindicker oder Rundräumer, wobei die Einrichtungen zur Behandlung des Klärgutes aus Schabern bestehen, die sich vom Tragarm nach unten erstrecken und deren Unterkante auf Ablagerungen auf den Beckenboden einwirkt und diese zur Mitte des Beckenbodens fördern, von wo diese entfernt werden.

Anzahl der Tragarme und Art und Anzahl der Schaber oder Räumschilder werden je nach Anwendungsbereich ausgelegt.

Der Tragarm läuft mit der Welle herum und die an ihm befestigten Schaber liegen auf der Oberfläche des Klärgutes.

Bei plötzlichem Anfall von stark inhomogenem, beispielsweise mit Klumpen versetztem Klärgut, wie zum Beispiel beim Ablassen von Bütten in Papierfabriken, müssen die Schaber kurzzeitig nach oben gezogen werden, damit sie nicht steckenbleiben. Dies wird bei der bekannten Anlage dadurch erreicht, daß beim Auftauchen eines Hindernisses der betroffene Tragarm nach oben und/oder seitlich geschwenkt wird.

Bei dieser bekannten Anlage wird bei Auftauchen beispielsweise einer lokalen Verdickung sogleich der gesamte Tragarm abgeschwenkt, wodurch praktisch auch diejenigen Schaber an diesem Tragarm zeitweise außer Funktion gesetzt werden, denen kein Hindernis im Wege gelegen hat.

Außerdem ist bei dieser bekannten Konstruktion eine Vorrichtung erforderlich, um das Gewicht der Tragarme aufzunehmen, da nur ein Auflagerpunkt am radial-inneren Ende der Tragarme am Umfang der Welle vorhanden ist. Diese Vorrichtung besteht aus eine oberhalb der Tragarme angeordneten zusätzlichen gemeinsamen Tragkonstruktion, die einen großen Teil des oberen Bereichs des Beckens beansprucht.

Es ist Aufgabe der Erfindung eine derartige Vorrichtung zum Einbau in Klärbecken baulich wesentlich zu vereinfachen und dadurch auch einen erhöhten Anwendungsbereich für derartige Tragarmkonstruktionen zu schaffen.

Dies löst die Erfindung dadurch, daß der Tragarm an seinem äußeren Ende eine Stützeinrichtung als Auflager im Randbereich des Klärbeckens aufweist.

Bei der erfindungsgemäßen Vorrichtung stützt sich also der Tragarm einerseits an der Welle und andererseits auf der Stützeinrichtung ab. Infolge der schwenkbaren Lagerung an der Welle kann der Tragarm beim Umlauf auf dem Beckenboden eventuellen Ungleichmäßigkeiten, sei es durch nachlässige Bauausführung, sei es durch lokale Klärgutkonzentrationen, einfach folgen, dadurch, daß mit - Umlaufen der Stützeinrichtung eine bodenabhängige Führung der Schaber bzw. Räumschilder erreicht wird.

0063697

In einer vorteilhaften Ausgestaltung der erfindungsgemäßen Vorrichtung ist daher auch vorgesehen, daß an der Unterseite des Tragarmes die Schaber vertikal verschiebbar befestigt sind und von Federeinrichtungen auf den Beckenboden gedrückt werden.

Dadurch läßt sich einerseits ein guter Kraftschluß zwischen der Unterkante der Schaber und dem Klärgut erzielen. Die Schaber können jedoch (je nach Einstellung der Federkraft entsprechend der Art des Klärguts) auch lokalen Verdickungen im Klärgut ohne weiteres folgen, ohne daß deswegen immer ein Verschwenken des gesamten Tragarms erforderlich wäre.

Infolge der Gewichtsverteilung, es handelt sich insoweit um eine "Zweipunktlagerung", können bei vergleichbaren statischen Konstruktionen größere Beckendurchmesser überspannt werden, bzw. bei vorgegebenen Beckendurchmessern können die verwendeten tragenden Bauteile geringer dimensioniert sein.

Bei größeren Klärbecken ist es auch denkbar weitere Stützeinrichtungen vorzusehen und ggf. weitere Gelenke im Tragarm einzusetzen.

Bei der erfindungsgemäßen Konzeption entfallen die bei der bekannten Anlage im oberen Bereich des Beckens angeordneten Tragkonstruktionen zur Aufnahme des Gewichtes des Tragarms.

Dies eröffnet wiederum die Möglichkeit, zusätzlich zur Verwendung eines Tragarms zur Schlammeindickung bzw. Rundräumung auch einen solchen zur Schwimmschlammentfernung am oberen Teil der Welle anzulenken, der sich horizontal über der Klärgutoberfläche erstreckt, wie dies eine weitere vorteilhafte Ausgestaltung der Erfindung vorschlägt.

Durch eine derartige Konstruktion zur Schwimmschlammentfernung kann die Beckenbrücke stationär gehalten werden und es können unterschiedlichste, an sich bekannte Schlammsammel- und -abführvorrichtungen eingesetzt werden.

Bei beiden Einsatzmöglichkeiten des Tragarms, die die Erfindung vorschlägt (als Schlammeindicker/Rundräumer bzw. zur Schwimmschlamment-

fernung) ist durch die "Zweipunktlagerung" des Tragarms eine Führung desselben in seinem Schwenkbereich über dem Beckenboden bzw. über der Beckenoberfläche auch dann sicher gewährleistet, wenn die Oberfläche, auf der die Stützeinrichtung sich bewegt, infolge baulicher Unzulänglichkeiten oder konstruktiv notwendiger Neigungen nicht genau planeben verläuft.

Eine einfache und wirkungsvolle Ausgestaltung der Erfindung sieht vor, daß die Stützeinrichtung aus mindestens einem Rad besteht; dadurch werden Reibungsverluste gering gehalten und ein Rad kann dem Verlauf der ihm zugeordneten Auflagerfläche (Beckenboden, Betonkonsole oder ähnliches) gut folgen.

Eine weitere Ausbildung sieht vor, daß das Rad motorgetrieben ist, so daß insbesondere bei dem Tragarm zur Schwimmschlammentfernung dieser unabhängig von anderen Bauteilen, beispielsweise dem als Rundräumer dienenden Tragarm betrieben werden kann.

Der erfindungsgemäß ausgestaltete Tragarm kann daher in einem Klärbecken durch Kombination mit geeigneten, an sich bekannten Vorrichtungen sowohl als Rundräumer als auch zur Schwimmschlammentfernung verwendet werden, und zwar entweder separat oder auch durch Einsatz zweier derart ausgestalteter Tragarme.

Zwei Ausführungsbeispiele der Erfindung werden nun an Hand von Zeich- nungen näher erläutert. Es zeigen:

Fig. 1    eine Teil-Seitendarstellung eines Kläranlagenbeckens mit dem als Rundräumer bzw. Schlammeindicker wirkenden Tragarm,

Fig. 2    eine Schnittdarstellung gemäß der Linie II-II in Fig. 1,

Fig. 3    eine Teil-Seitendarstellung des oberen Teils eines Kläranlagenbeckens mit dem erfindungsgemäßen Tragarm zur Schwimmschlammentfernung.

Bei der Anwendung der erfindungsgemäßen Vorrichtung zur Schlammeindickung bzw. Rundräumung findet diese Verwendung in einem Klärbecken 30, auf dessen Beckenboden sich das Klärgut 31 absetzt. In der Mitte

0063697

des Beckens 30 ist eine vertikal angeordnete Welle 10 gelagert, an der seitlich ein Tragarm 11 befestigt ist, dessen anderes Ende sich in der Nähe des Beckenrandes auf eine Stützeinrichtung in Form eines Rades 13 stützt. Bei der Verbindung des Tragarmes 11 mit der Welle 10 handelt es sich um eine Gelenkverbindung derart, daß der Tragarm in der Ebene parallel zur Längsachse der Welle 10 verschwenkt werden kann. Dazu ist um die Welle 10 eine Rahmenkonstruktion 14 gelegt, in die die beiden Teile des Tragarms 11 eingesteckt werden. Die Konstruktion 14 und der Tragarm 11 weisen entsprechende Bohrungen auf, so daß mit Hilfe von Stiften oder Splinten 15 eine Drehachse a-a senkrecht zur Wellenachse b-b entsteht.

An der Unterseite des Tragarmes 11 sind Schaber 12 befestigt, deren Unterkante auf das Klärgut 31 einwirkt. Diese Schaber können entweder in einer entsprechenden Bohrung des Tragarms frei laufen oder, wie im Ausführungsbeispiel dargestellt, in einer Bohrung freilaufend und durch eine geeignete Feder 121 zusätzlich zu ihrem Eigengewicht auf das Klärgut 31 gedrückt werden. Anstelle des Rades 13 kann auch eine Kufe oder ein schlittenartiges Gebilde vorgesehen sein. Die Anzahl der Schaber 12 (zwei sind dargestellt) und deren Winkeleinstellung zum Tragarm 11 hängt von der speziellen Aufgabenstellung ab; besonders zweckmäßig ist eine Konstellation, bei der die Schaber den Schlamm durch "Übergabe" zum jeweils innenliegenden nächsten Schaber 12 zur Mitte des Beckenbodens fördern.

Über dem Tragarm 11 erstreckt sich ein zusätzlicher Arm 20, der zur Stabilisierung von Krählstäben 21 dient, deren unteres Ende auf dem Tragarm 11 befestigt ist. Diese Krählstäbe dienen in bekannter Weise als Eindickungshilfe. Durch die erfindungsgemäße Konzeption bei der Gestaltung des Tragarms ist man bei der Beckengestaltung im oberen Teil des Beckens frei und kann dort Einbauten nach Wahl vornehmen, beispielsweise für die Schwimmschlammentfernung oder zur Einplanung von Überlauftrassen, was bei den bisherigen Lösungen nicht möglich war und wie dies nun im Zusammenhang mit dem zweiten Ausführungsbeispiel dargestellt ist:

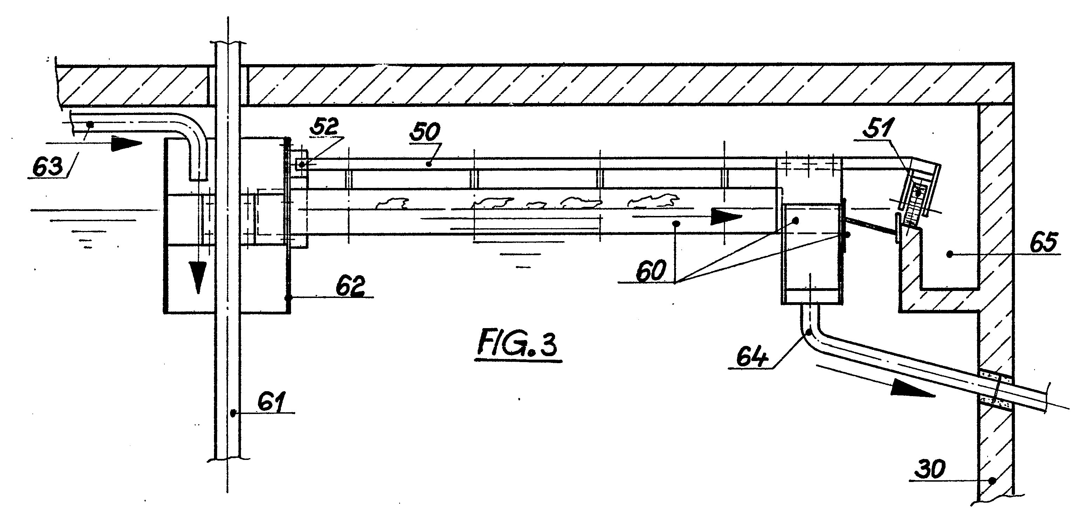

Bei diesem zweiten Ausführungsbeispiel (Fig. 3) ist ebenfalls ein Tragarm 50 vorgesehen, der am oberen Teil einer Welle 61 und über eine Stützeinrichtung 51 am Beckenrand gelagert ist. Als Einrichtung

0063697

60 für die Sammlung und Abführung des Schwimmschlammes sind an sich bekannte Bauteile dargestellt (vertikal in die Oberfläche des Klärgutes eintauchendes Schwimmschlamm-Räumblech, das mit einer Gummiabstreifschürze im Bereich der Tauchwand endet, Ablaufkasten für den Schwimmschlamm, umlaufende Tauchwand usw.), die sich mit dem erfindungsgemäß ausgestalteten Tragarm 50 vorteilhaft kombinieren lassen. Als geeignete Einrichtungen zur Sammlung und Abführung des Schwimmschlammes lassen sich aber auch bekannte Pumpensysteme, wie beispielsweise in der DE-OS 27 40 645 beschrieben, verwenden.

Beim dargestellten Ausführungsbeispiel ist ein Einlaufrohr 62 fest mit der zentralen Welle 61 zusammengebaut und dreht sich folglich mit dieser. Am Umfangsbereich des Einlaufrohres 62 ist über eine Schwenkverbindung 52 der Tragarm 50 angelenkt, dessen anderes Ende über ein Rad 51 auf dem Rand oder am Boden einer Klarwasserablaufrinne 65 aufsitzt und dort abrollt. Wie oben schon angedeutet, kann das Rad 51 auch einen eigenen Antrieb aufweisen und somit unabhängig von der Geschwindigkeit der Welle 61 drehen.

Der Tragarm 50 erstreckt sich demnach vom Umfangsbereich des Einlaufrohres 20 bis zum Rand des Klärbeckens 30.

Die Vorrichtung arbeitet wie folgt: Über die Zuführleitung 63 gelangt die zu klärende Flüssigkeit durch das Einlaufrohr 62 in das Klärbecken. Während des Klärvorganges (oder Eindickung) sammelt sich an der Wasseroberfläche der in der Zeichnung angedeutete Schwimmschlamm. Beim horizontalen Überstreichen der Klärgutoberfläche durch den Tragarm 50 (unter Ausgleich evtl. Höhendifferenzen auf dem Umfang der Klarwasserablaufrinne 65) wird der Schwimmschlamm von dem am Tragarm 50 befestigten und entsprechend aus der radialen Richtung abgewinkelten Räumblech erfaßt und nach aussen gedrückt, wo er pro Umlauf des Tragarms 50 im Außenbereich des Räumbleches gesammelt wird und von dort in den Ablaufkasten abgestreift wird, wo er beispielsweise über einen Schwimmschlammablauf 64 in den Außenbereich des Klärbeckens befördert wird.

Die erfindungsgemäße Konstruktion mit einem Tragarm gestattet also einen verbesserten Einsatz an sich bekannter Einrichtungen zur Sammlung und Abführung von Schwimmschlamm, die sich insbesondere vorteil-

0063697

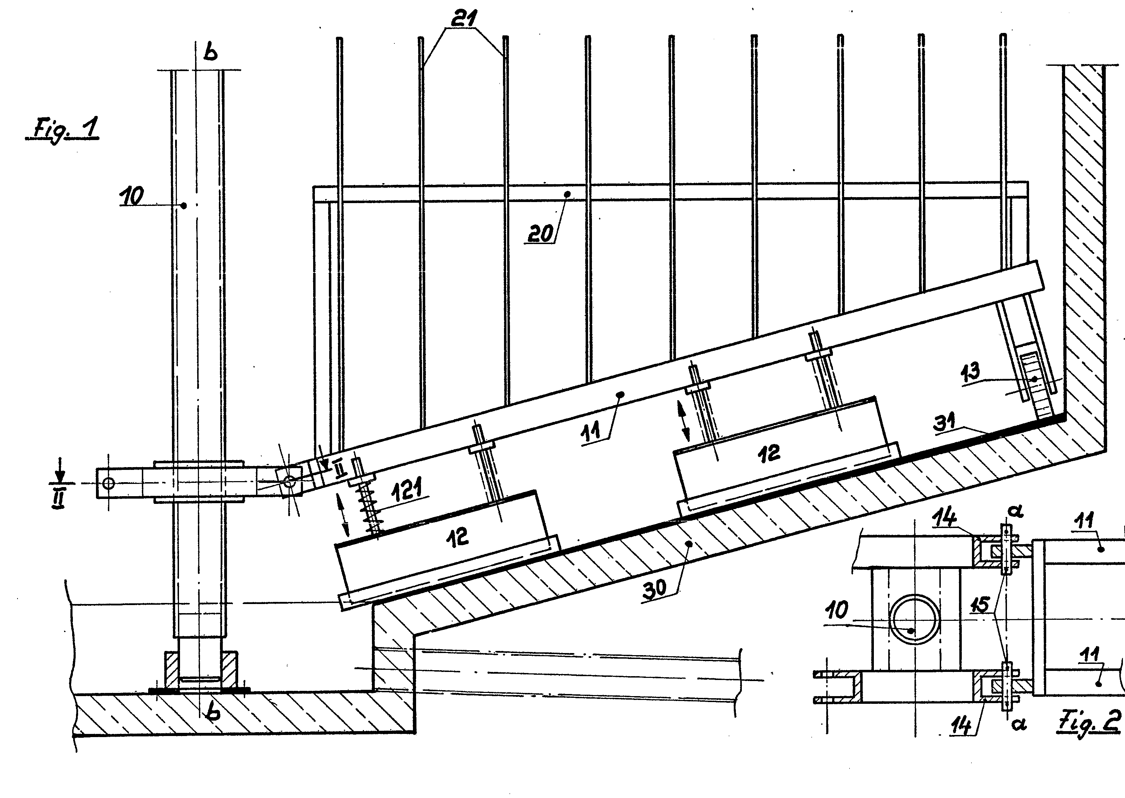

haft dann einsetzen läßt, wenn die Welle 61 ohnehin zur Rotation eines Schlammeindickers bzw. Rundräumers im Bodenbereich des Klärbeckens (Welle 10 in Fig. 1) vorhanden ist. Dabei kann die Lagerung des äußeren Endes des Tragarms 50 mittels des Rades 51 entweder auf der Oberkante der Klarwasserablaufrinne 65 erfolgen oder innerhalb dieser Rinne 65 selbst oder auch gegebenenfalls auf einer an der Wand des Beckens 30 anbetonierten Konsole.

Die erfindungsgemäße Vorrichtung eignet sich auch gut zum Nachrüsten in bereits vorhandenen Kläranlagen, da der Tragarm und seine Lagerung ohne Schwierigkeiten an die verschiedenen vorhandenen baulichen Gegebenheiten anpaßbar ist.

0063697

Patentansprüche :
_____

1. Vorrichtung zum Einbau in Klärbecken, mit einer axial im Klärbekken drehenden Welle, an der ein radial sich erstreckender Tragarm vertikal schwenkbar gehalten ist, an dem Einrichtungen zur Behandlung des Klärgutes angebracht sind,
dadurch gekennzeichnet, daß der Tragarm (11, 50) an seinem äußeren Ende eine Stützeinrichtung (13, 51) als Auflager im Randbereich des Klärbeckens aufweist.

2. Vorrichtung nach Anspruch 1, dadurch gekennzeichnet, daß der Tragarm (11) zur Schlammeindickung oder Rundräumung am unteren Teil der Welle (10) angelenkt ist und daß an seiner Unterseite vertikal verschiebbare Schaber (12) befestigt sind, die von Federeinrichtungen (121) auf den Beckenboden (30) gedrückt werden (Fig. 1).

3. Vorrichtung nach Anspruch 2, dadurch gekennzeichnet, daß auf dem Tragarm (11) Krählstäbe (21) befestigt sind.

4. Vorrichtung nach Anspruch 1, dadurch gekennzeichnet, daß der Tragarm (50) zur Schwimmschlammentfernung am oberen Teil der Welle (61) angelenkt ist und sich horizontal über der Klärgutoberfläche erstreckt (Fig. 3).

5. Vorrichtung nach Anspruch 1, dadurch gekennzeichnet, daß die Stützeinrichtung (13, 51) aus mindestens einem Rad besteht.

6. Vorrichtung nach Anspruch 5, dadurch gekennzeichnet, daß das Rad motorgetrieben ist.

7. Vorrichtung nach Anspruch 2 und 4, dadurch gekennzeichnet, daß an einem gemeinsamen Tragarm sowohl Einrichtungen zur Schwimmschlammentfernung als auch Einrichtungen zur Schlammeindickung angebracht sind.

Fig. 1

Fig. 2

FIG.3

# EUROPÄISCHER RECHERCHENBERICHT

Europäisches Patentamt

0063697

Nummer der Anmeldung

EP 82 10 2551

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 496 236 (C.E. WUENSCH) * Seite 3, Zeilen 48-76; Figur 1 * | 1,5 | B 01 D 21/06 B 01 D 21/18 |
| | --- | | |
| X | US-A-3 679 063 (R.L. PATE) * Spalte 4, Zeilen 29-37; Figur 2 * | 1,5 | |
| | --- | | |
| X | DE-A-2 160 194 (J.M. VOITH GmbH) * Seite 3, Zeile 5 - Seite 4, Zeile 15; Seite 6, Zeilen 1-19; Figur 1 * | 1,3,5, 6 | |
| | --- | | |
| X | DE-A-1 927 179 (PASSAVANT-WERKE) * Seite 3, Zeile 1 - Seite 6, Zeile 9; Figuren 1-4 * | 1,5,6 | |
| | ----- | | RECHERCHIERTE SACHGEBIETE (Int. Cl. ³) |
| | | | B 01 D |

Der vorliegende Recherchenbericht wurde für alle Patentansprüche erstellt.

| Recherchenort | Abschlußdatum der Recherche | Prüfer |
|---|---|---|
| DEN HAAG | 01-08-1982 | DE GUSSEM J.L. |

EPA Form 1503 03 82